# EUROPEAN PATENT SPECIFICATION

(11) **EP 1 403 852 B1**
(45) Date of publication and mention of the grant of the patent: **09.03.2005**
(21) Application number: 03021595.8
(22) Date of filing: 25.09.2003
(51) Int. Cl.: G10L 15/26, G06F 17/30

(54) **Voice activated music playback system**
Sprachaktiviertes Musikwiedergabesystem
Système de reproduction de musique par activation vocale

(30) Priority: 30.09.2002 US 260477
(43) Date of publication of application: 31.03.2004
(73) Proprietor: MITSUBISHI DENKI KABUSHIKI KAISHA, Tokyo 100-8310 (JP)
(72) Inventor: Wolf, Peter P., Winchester MA 01890 (US); Casey, Michael A., London N1 8 NT (GB)
(74) Representative: Pfenning, Meinig & Partner

(56) References cited:
- EP-A- 1 202 187
- US-B1- 6 397 181
- WOLF P ET AL: "The MERL spoken query information retrieval system a system for retrieving pertinent documents from a spoken query" IEEE INTERNATIONAL CONFERENCE ON MULTIMEDIA AND EXPO (ICME) , vol. 2, 26 August 2002 (2002-08-26), pages 317-320, XP010604761
- CASEY M: "MPEG-7 SOUND-RECOGNITION TOOLS" IEEE TRANSACTIONS ON CIRCUITS AND SYSTEMS FOR VIDEO TECHNOLOGY, IEEE INC. NEW YORK, US, vol. 11, no. 6, June 2001 (2001-06), pages 737-747, XP001059866 ISSN: 1051-8215
- MORENO P J ET AL: "FROM MULTIMEDIA RETRIEVAL TO KNOWLEDGE MANAGEMENT" COMPUTER, IEEE COMPUTER SOCIETY, LONG BEACH., CA, US, US, vol. 35, no. 4, April 2002 (2002-04), pages 58-66, XP001101794 ISSN: 0018-9162

## Description

### BACKGROUND OF THE INVENTION

### 1. Field of the Invention

The present invention relates generally to searching and retrieving audio content, and more particularly to retrieving recorded music in a database using spoken queries.

### 2. Description of the Related Art

With the advent of advanced digital compression techniques and high capacity memories, it is now possible to store very large music libraries in very small devices. Media playback devices can store thousands of music tracks.

Traditional interfaces, where the user must manually select the desired recording media, as well as specific "tracks" do not work for such devices, particularly if the user is engaged in other activities while listening. In addition, the modem music library can be collected in an ad hoc manner which may even make it impossible for a user to know exactly what is stored in the library.

Some prior art methods for enabling a user to access music in a database include voice recognition technology, but the results are limited to only specific sound tracks, or files containing sound tracks manually ordered by the user, see, e.g. "How to use and enjoy your MXP 100," e.Digital Corporation, 2001.

Therefore, new means for organizing and accessing recordings stored in a large music library need to be provided.

### SUMMARY OF THE INVENTION

The invention provides a method and system for selecting recordings stored in a database.

A spoken query is represented as a phonetic lattice and paths through the phonetic lattice are converted into a set of text queries. The database is searched to generate a playlist of recordings matching the set of text queries and samples of the recordings on the playlist are then played. A particular sample is selected as an acoustic query for searching the database to update the playlist with recording matching the acoustic query. Samples of the recordings on the updated playlist are played and a particular sample of the updated play list is selected. A particular record associated with the sample is then played.

### BRIEF DESCRIPTION OF THE DRAWINGS

Preferred embodiments of the present invention will be described in detail based on the following figures, wherein:
Figure 1 is a voice activated music playback system according to the invention; and
Figure 2 is a flow diagram for searching and retrieving sound recordings according to the invention.

### DETAILED DESCRIPTION OF THE PREFERRED EMBODIMENTS

### System Structure

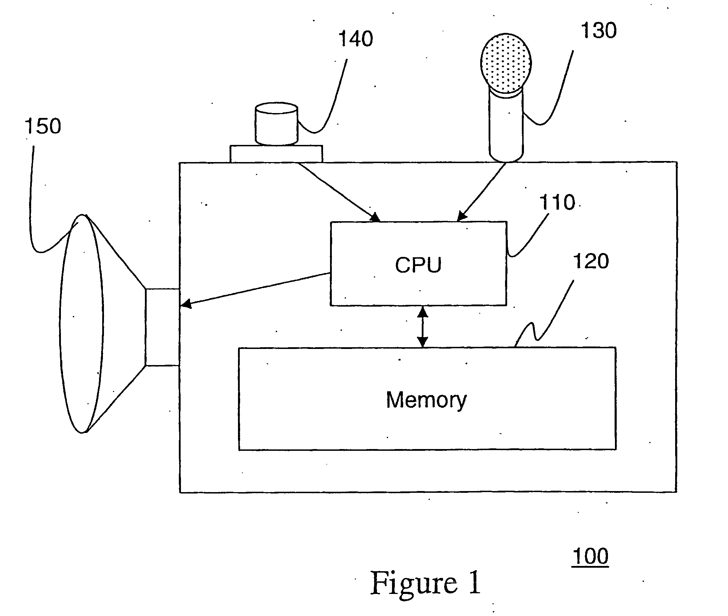

Figure 1 shows the music playback system 100 according to the invention. The system includes a processor 110, a memory 120, a microphone 130, a switch 140 and one or more speakers 150 connected to each other.

The processor 110 is substantially conventional, executing software programs stored in the memory 120. The processor 110 includes an audio "card" that can convert digital data to audio signals. The memory 120 can be in various forms including RAM, ROM, disk, and flash memories. The switch 140 can be configured in various ways, e.g., push, toggle, slide, etc., to conform to the operations detailed below. The system 100 can be hand-held, or mounted in a vehicle. The connections can be wireless.

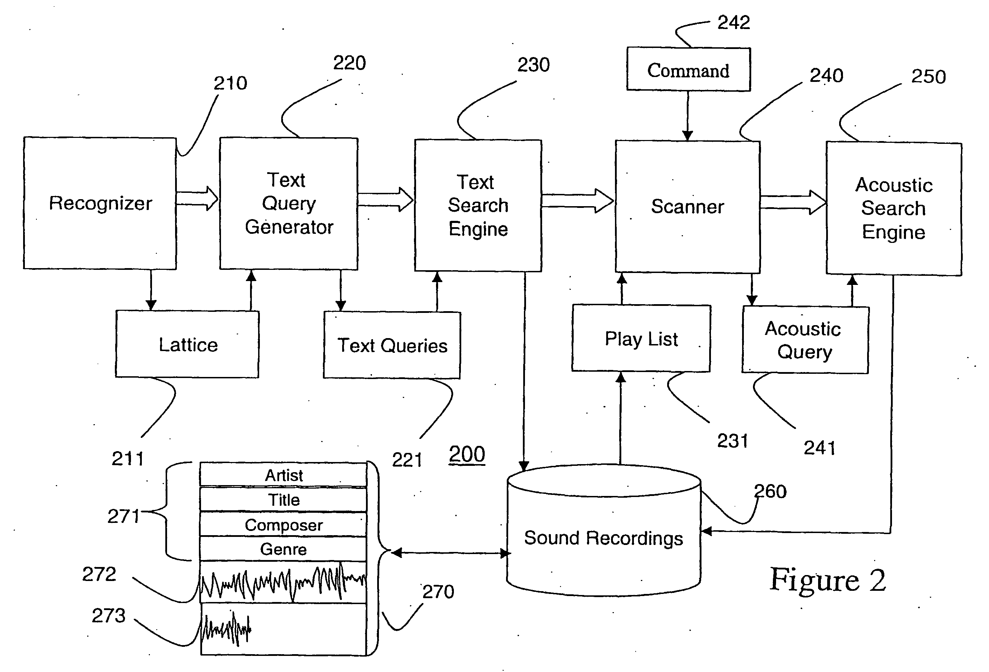

Figure 2 shows additional details of the system 100, including a speech recognizer 210, a text query generator 220, a text search engine 230, a scanner 240 and an acoustic search engine 250. These are implemented by software modules stored in the memory 120 and executed by the processor 110.

The memory 120 also stores a database 260 of records 270. Each record 270 includes associated text descriptors 271, an audio recording 272, and a sample 273 of the recording 272. The switch 140 and the microphone 130 provide input to the recognizer 210 and the scanner 240. The speaker 150 plays samples and recordings as selected by the user. The speaker 150 can also be used to provide system status information.

### System Operation

The invention, as claimed in claims 1 and 10, is further explained below.

As shown in a method 200 in Figure 2, the recognizer 210 receives a spoken user query via the microphone 130. The switch 140 can be used to actuate the microphone. The recognizer 210 represents the spoken query as a phonetic lattice 211. Nodes in the lattice represent phonetic primitives, such as words, syllables, or phonemes, and edges indicate possible sequences of the primitives.

The text query generator 220 converts the lattice 211 into a set of text queries 221 representing the paths through the lattice as likely textual representations of the spoken query, see, Wolf, et al., "The MERL spoken query information retrieval system. A system for retrieving pertinent documents from a spoken query" in IEEE International Conference on Multimedia and EXPO (ICME), August 26, 2002. As another example, in US Patent 6,397,181, published on May 28, 2002, retrieval of digital media content is achieved by converting a speech query into a word lattice and producing a shortlist from it. The shortlist is then used to produce the search result.

The text search engine 230 searches the records 270 in the database 260 to generate a play list 231 by comparing the text queries 221 to the text descriptors 271 of each record 270. The play list indicates records having text descriptors matching the text query 221. The play list can be ordered according text descriptors, a certainty of the text query, or a random order.

The scanner 240 plays the sample 273 of each record 270 in the order of the play list 231 using the speaker 150. The user can select a sample from the play list by inputting a command 242 using the microphone 130 or the switch 140. The command either plays the corresponding recording 272 or updates the play list.

To update the play list, the selected sample forms an acoustic query 241. The acoustic search engine 250 searches the records 270 and updates the play list with records 270 matching the acoustic query 241, see, Casey, "MPEG-7 Sound Recognition Tools" in IEEE Transactions on Circuits and Systems for Video Technology, June 2001. Again, the play list 231 can be ordered or random.

The scanner 240 can then play the samples of the recordings in the updated play list 231. Alternatively, the user can issue a command to the scanner, using the microphone or the switch, to play any or each recording indicated by the updated play list in any order.

Although the invention has been described by way of examples of preferred embodiments, it is to be understood that various other adaptations and modifications may be made within the spirit and scope of the invention.

## Claims

1. A method for selecting recordings from a database (260) stored in a memory (120), comprising:
representing (210) a spoken query as a phonetic lattice (211);
converting (220) paths through the phonetic lattice (211) to a set of text queries (221);
searching (230) the database (260) to generate a playlist (231) of recordings (272) matching the set of text queries (221);
playing (240) samples of the recordings (273) on the playlist (231); and
selecting (240) a particular sample as an acoustic query (241);
searching (250) the database (260) to update the playlist (231) with recordings (272) matching the acoustic query (241);
playing (240) samples of the recordings (273) on the updated playlist (231); and
selecting (242) a particular sample of the updated playlist (231) to play a particular associated recording.

2. The method of claim 1 further comprising:
maintaining records (270) in the database (260), each record (270) including a recording (272), a sample of the recording (273) and associated text descriptors (271).

3. The method of claim 2 wherein the step of searching (230) the database (260) to generate the playlist (231) further comprises:
comparing the set of text queries (221) with the associated text descriptors (271) in each record (270); and
identifying records (270) having associated text descriptors (271) that match the set of text queries (221).

4. The method of claim 2, further comprising:
ordering (230) the playlist (231) according to the text descriptors (271).

5. The method of claim 2, further comprising:
ordering (230) the playlist (231) according to a certainty of the text query (221).

6. The method of claim 2, further comprising:
ordering (230) the playlist (231) according to a random order.

7. The method of claim 1 wherein the steps of selecting are initiated in response to a command (242).

8. The method of claim 7 wherein the command (242) is a spoken command (130).

9. The method of claim 7 wherein the command is input mechanically (140).

10. An apparatus for selecting recordings from a database (260) stored in a memory (120), comprising:
a speech recognizer (210) for representing a spoken query as a phonetic lattice (211);
means (220) for converting paths through the phonetic lattice (211) to a set of text queries (221);
means (230) for searching the database (260) to generate a playlist (231) of recordings (272) matching the set of text queries (221);
a scanner (240) for playing samples of the recordings (273) on the playlist (231), the scanner (240) including a speaker (150);
means (250) for updating the playlist (231) with recordings (272) in the database (260) matching an acoustic query (241); and
means (242) for selecting a particular sample from the playlist (231), having two modes, in a first mode, said means is capable of selecting a particular sample as the acoustic query (241), and in a second mode said means is capable of selecting a particular sample associated with a recording in the database (260) matching the acoustic query (241).

11. The apparatus of claim 10 wherein a connection with the memory (120) is wireless.

## Patentansprüche

1. Verfahren zur Auswahl von Aufzeichnungen aus einer in einem Speicher (120) gespeicherten Datenbank (260), welches aufweist:
Darstellen (210) einer gesprochenen Frage als ein phonetisches Gitter (211);
Umwandeln (220) von Pfaden durch das phonetische Gitter (211) in einen Satz von Textfragen (221); Durchsuchen (230) der Datenbank (260) zur Erzeugung einer Wiedergabeliste (231) von Aufzeichnungen (271), die mit dem Satz von Textfragen (221) abgestimmt sind;
Wiedergeben (240) von Mustern der Aufzeichnungen (273) auf der Wiedergabeliste; und
Auswählen (240) eines besonderen Musters als eine akustische Frage (241);
Durchsuchen (250) der Datenbank (260) zur Aktualisierung der Wiedergabeliste (231) mit Aufzeichnungen (272), die auf die akustische Frage (241) abgestimmt sind;
Wiedergeben (240) von Mustern der Aufzeichnungen (273) auf der aktualisierten Wiedergabeliste (231); und
Auswählen (242) eines besonderen Musters der aktualisierten Wiedergabeliste (231), um eine besondere assoziierte Aufzeichnung wiederzugeben.

2. Verfahren nach Anspruch 1, weiterhin aufweisend:
Aufrechterhalten von Verzeichnissen (270) in der Datenbank (260), wobei jedes Verzeichnis (270) eine Aufzeichnung (272), ein Muster der Aufzeichnung (273) und assoziierte Textbeschreibungssätze (271) enthält.

3. Verfahren nach Anspruch 2, bei dem der Schritt des Durchsuchens (230) der Datenbank (260) zum Erzeugen der Wiedergabeliste (231) weiterhin aufweist:
Vergleichen des Satzes von Textfragen (221) mit den assoziierten Textbeschreibungssätzen (271) in jedem Verzeichnis (270); und
Identifizieren von Verzeichnissen (270) mit assoziierten Textbeschreibungssätzen (271), die mit dem Satz von Textfragen (221) abgestimmt sind.

4. Verfahren nach Anspruch 2, weiterhin aufweisend:
Ordnen (230) der Wiedergabeliste (231) entsprechend den Textbeschreibungssätzen (271).

5. Verfahren nach Anspruch 2 weiterhin aufweisend:
Ordnen (230) der Wiedergabeliste (231) entsprechend einer Bestimmtheit der Textfrage (221).

6. Verfahren nach Anspruch 2 weiterhin aufweisen:
Ordnen (230) der Wiedergabeliste (231) entsprechend einer zufälligen Reihenfolge.

7. Verfahren nach Anspruch 1, bei dem die Schritte des Auswählens als Antwort auf einen Befehl (241) initiiert werden.

8. Verfahren nach Anspruch 7, bei der Befehl (242) ein gesprochener Befehl (130) ist.

9. Verfahren nach Anspruch 7, bei dem der Befehl mechanisch (140) eingegeben wird.

10. Vorrichtung zum Auswählen von Aufzeichnungen aus einer in einem Speicher (120) gespeicherten Datenbank (26), welche aufweist:
einen Spracherkenner (210) zum Darstellen einer gesprochenen Frage als ein phonetisches Gitter (211) ;
Mittel (220) zum Umwandeln von Pfaden durch das phonetische Gitter (211) in einen Satz von Textfragen (221);
Mittel (230) zum Durchsuchen der Datenbank (260) für die Erzeugung einer Wiedergabeliste (231) von Aufzeichnungen (272), die mit dem Satz von Textfragen (221) abgestimmt sind;
einen Abtaster (241) zum Wiedergeben von Mustern der Aufzeichnungen (273) in der Wiedergabeliste (231), wobei der Abtaster (240) einen Lautsprecher (150) enthält;
Mittel (250) zum Aktualisieren der Wiedergabeliste (231) mit Aufzeichnungen (272) in der Datenbank (260), die mit einer akustischen Frage (241) abgestimmt sind; und
Mittel (242) zum Auswählen eines besonderen Musters aus der Wiedergabeliste (231), mit zwei Moden, wobei in einem ersten Modus die Mittel in der Lage sind, ein besonderes Muster als die akustische Frage (241) auszuwählen, und in einem zweiten Modus die Mittel in der Lage sind, ein besonderes Muster, das mit einer Aufzeichnung in der Datenbank (260) assoziiert ist, die mit der akustischen Frage (241) abgestimmt ist, auszuwählen.

11. Vorrichtung nach Anspruch 10, bei der eine Verbindung mit dem Speicher (120) drahtlos ist.

## Revendications

1. Procédé pour sélectionner des enregistrements à partir d'une base de données (260) mémorisée dans une mémoire (120), comprenant:
la représentation (210) d'une demande parlée sous la forme d'un réseau phonétique (211);
la conversion (220) des trajets dans le réseau phonétique (211) en un ensemble de demandes de textes (221);
la recherche (230) de la base de données (260) pour produire une liste de lecture (231) d'enregistrements (272) correspondant à l'ensemble de demandes de textes (221);
la lecture (240) d'échantillons à partir des enregistrements (273) dans la liste de lecture (231) et
la sélection (240) d'un échantillon particulier en tant que demande acoustique (241);
la recherche (250) de la base de données (260) pour la mise à jour de la liste de lecture (231) avec des enregistrements (272) correspondant à la demande acoustique (241);
la lecture (240) d'échantillons des enregistrements (237) de la liste de lecture mise à jour (231); et
la sélection (242) d'un échantillon particulier de la liste de lecture mise à jour (231) pour la lecture d'un enregistrement associé particulier.

2. Procédé selon la revendication 1, comprenant en outre:
le maintien d'enregistrements (270) dans la base de données (260), chaque enregistrement (270) comprenant un enregistrement (272), un échantillon de l'enregistrement (273) et des descripteurs de texte associés (271).

3. Procédé selon la revendication 2, selon lequel l'étape (230) de recherche de la base de données (260) pour la production de la liste de lecture (231) comprend en outre:
la comparaison de l'ensemble de demandes de texte (221) au descripteur associé de texte (261) dans chaque enregistrement (270); et
l'identification d'enregistrements (270) auxquels sont associés des descripteurs de test (271) qui correspondant à l'ensemble de demandes de texte (221).

4. Procédé selon la revendication 2, comprenant en outre l'ordonnancement (230) de la liste de lecture (231) en fonction des descripteurs de texte (271).

5. Procédé selon la revendication 2, comprenant en outre l'ordonnancement (230) de la liste de lecture (231) en fonction d'un caractère certain de la demande de texte (221).

6. Procédé selon la revendication 2, comprenant en outre l'ordonnancement (230) de la liste de lecture (231) conformément à un ordre aléatoire.

7. Procédé selon la revendication 1, selon lequel les étapes de sélection sont déclenchées en réponse à une commande (242).

8. Procédé selon la revendication 7, selon lequel la commande (242) est une commande parlée (130).

9. Procédé selon la revendication 7, selon lequel la commande est entrée mécaniquement (140).

10. Dispositif pour la sélection d'enregistrements à partir d'une base de données (260) mémorisée dans la mémoire (120), comprenant:
un dispositif de reconnaissance vocale (210) pour représenter une demande parlée en tant que réseau phonétique (211);
des moyens (220) pour convertir des trajets passant à travers le réseau phonétique (211) d'un ensemble de demandes de texte (221);
des moyens (230) pour effectuer une recherche dans la base de données (260) pour produire une liste de lecture (231) d'enregistrements (272) correspondant à l'ensemble de demandes de texte (221);
un scanner (240) pour lire les échantillons des enregistrements (273) dans la liste de lecture (231), le scanner (240) comprenant un haut-parleur (150);
des moyens (250) pour la mise à jour de la liste de lecture (231) avec des enregistrements (272) dans la base de données (260) correspondant à une demande acoustique (240); et
des moyens (242) pour sélectionner un échantillon particulier à partir de la liste de lecture (231), comportant deux modes, dans un premier mode, lesdits moyens étant à même de sélectionner un échantillon particulier en tant que demande acoustique (241), et dans un second mode, lesdits moyens étant à même de sélectionner un échantillon particulier associé à un enregistrement dans la base de données (260) correspondant à la demande acoustique (241).

11. Dispositif selon la revendication 10, dans lequel une connexion avec la mémoire (120) s'effectue sans fil.
